# EUROPÄISCHE PATENTSCHRIFT

(11) **EP 0 892 491 B1**
(45) Veröffentlichungstag und Bekanntmachung des Hinweises auf die Patenterteilung: **02.05.2003**
(21) Anmeldenummer: 98112941.4
(22) Anmeldetag: 13.07.1998
(51) Int. Cl.: H02P 3/04

(54) **Schaltegerät für elektromagnetisch betätigte Baugruppen**
Switching device for electromechanically actuated assemblies
Dispositif de commutation pour assemblages à commande électromécanique

(30) Priorität: 16.07.1997 DE 19730440
(43) Veröffentlichungstag der Anmeldung: 20.01.1999
(73) Patentinhaber: Flender Tübingen GmbH, 72072 Tübingen (DE)
(72) Erfinder: Mayer, Klaus, 72108 Rottenburg (DE); Ziepel, Ottmar, 72130 Ofterdingen (DE); Strauss, Bernd, 72800 Eningen (DE)
(74) Vertreter: Radünz, Ingo, Dipl.-Ing.

(56) Entgegenhaltungen:
- EP-A- 0 087 591
- EP-A- 0 097 237
- EP-A- 0 242 671
- EP-A- 0 323 566
- US-A- 4 145 645

## Beschreibung

Die Erfindung betrifft ein Schaltgerät für elektromagnetisch betätigte Baugruppen, insbesondere eine elektromagnetisch betätigte Gleichstrombremse eines Drehstrommotors, mit einem Schaltkontakt sowie einer Gleichrichtervorrichtung mit integrierter Schutzbeschaltung, die dem Schaltkontakt nachgeschaltet ist.

Derartige Bremsen können mit den Motorklemmen verbunden sein. Nach der DE 32 49 877 C2 ist eine Schaltungseinrichtung für Gleichstrombremsung eines Drehstrommotors bekannt, der über Phasenleiter an ein Drehstromnetz angeschlossen ist, mit einem einphasigen Bremsstromkreis, der das Drehstromnetz und eine Phase des Drehstrommotors miteinander verbindet und der einen ersten Teilstromkreis mit einem Gleichrichterelement und einen zweiten Teilstromkreis mit einer Freilaufdiode enthält, mit einem Betriebsschütz und einem Bremsschütz, das den Bremsstromkreis schaltet, wobei ein Schütz durch Hilfsschaltglieder das andere Schütz steuert. Dabei weist das Betriebsschütz Ein-Schaltglieder in dem Leiter der ersten und zweiten Phase und ein Aus-Schaltglied im Bremsstromkreis auf, wobei der zweite Teilstromkreis an den schaltgliedfreien Leiter der dritten Phase angeschlossen ist. Das Bremsschütz weist ein Ein-Schaltglied in dem Leiter der ersten Phase und ein Aus-Schaltglied im Bremsstromkreis sowie ein Ein-Hilfsschaltglied auf, das das Betriebsschütz steuert. Dabei ist nur das Bremsschütz von außen ein- und ausschaltbar.

Bei dem Gegenstand nach dem Stand der Technik wirkt sich nachteilig aus, daß die Schaltungseinrichtung über lange Anschlußleitungen mit den Motorklemmen verbunden ist und die Bauweise recht platzaufwendig gestaltet ist.

Aus EP-A-0 242 671 ist eine Bremse für einen Motor, insbesondere für einen Wechselstrommotor mit einem Elektromagneten bekannt, bei dem zur Verbesserung der dynamischen Eigenschaften ohne Erhöhung der Verlustleistung die Spule des Elektromagneten durch einen Zwischenabgriff in zwei Teilspulen unterteilt ist, deren eine Teilspule in einem Freilaufstromkreis angeordnet ist. Bei der angegebenen Bremseinrichtung ist weiterhin ein schaltbarer Schalter im Freilaufstromkreis des Elektromagneten vorgesehen. Dabei kann der Schalter, der Teil einer Steuerschaltung ist, mittels dieser Steuerschaltung durch den Motorstrom geschaltet werden. Die Steuerschaltung wird dabei vorzugsweise als Zusatzgerät in einem separaten Gehäuse ausgebildet. Weiterhin weist die Steuerschaltung unter anderem als Element einen Stromwandler auf, so dass der Motorstrom und nicht die am Motor anliegende Spannung erfaßt wird. Ansonsten ist die Schaltung aufgrund ihrer speziellen Bedürfnisse mit dem vorgesehenen Freilaufstromkreis und dem Zwischenabgriff an den zwei Teilspulen des Elektromagneten so aufwendig aufgebaut, dass die Elektronik für die Schaltung des Elektromagneten ebenfalls in einem separaten Gehäuse angeordnet ist.

Weiterhin ist aus EP-A-0 097 237 eine Schaltungsanordnung zur Unterbrechung des Freilaufstromes für Lüftmagneten von Bremsmotoren bekannt, wobei an das Wechselspannungsnetz ein Gleichrichter angeschlossen ist, an dessen Ausgangsklemmen über einen durch einen Varistor geshunteten Schalter der Lüftmagnet liegt. Ferner ist für den Lüftmagneten eine Freilaufdiode vorgesehen, wobei der Schalter in den über die Freilaufdiode führenden Freilaufstromkreis des Lüftmagneten eingeschaltet ist. Mit den Eingangsklemmen des Gleichrichters ist eine Steuerschaltung verbunden, deren Ausgang an dem Steuereingang des als gesteuerten Halbleiterschalters ausgebildeten Schalters liegt und die den Halbleiterschalter bei vorhandener Netzwechselspannung einschaltet. Die angegebene Schaltungsanordnung arbeitet danach mit einem Wechselspannungswandler, der die Schaltungsanordnung steuert, so dass die erfaßte Wechselspannung die zugrundeliegende Regelgröße darstellt. Weiterhin ist die Schaltungsanordnung recht aufwendig aufgebaut, so dass ein universeller Einsatz der Schaltungsanordnung nicht möglich ist.

Der Erfindung liegt die Aufgabe zugrunde, ein Schaltgerät für elektromagnetisch betätigte Baugruppen, insbesondere zum Betätigen einer elektromagnetischen Bremse eines Elektromotors, zu schaffen, das sich durch eine kompakte Bauweise ohne lange Anschlußleitungen und durch sehr hohe Abschaltgeschwindigkeiten oder sehr kurze Verknüpfungszeiten auszeichnet.

Die Aufgabe wird gemäß der Erfindung dadurch gelöst, daß ein Stromwandler angeordnet ist, der dem Schaltkontakt vorgeschaltet ist, daß die primäre Wicklung des Stromwandlers als ein Teil eines Leiters der Zuleitung einer Spannungsversorgung ausgebildet ist und daß der Stromwandler, der Schaltkontakt, die Gleichrichtervorrichtung mit verbundener Schutzbeschaltung einschließlich aller erforderlichen Anschlüsse gemeinsam in dem Schaltgerät integriert sind.

Vorteilhafte Ausgestaltungen der Erfindung sind darin zu sehen, daß das Schaltgerät für die Spannungsversorgung mit zwei Leitern der Motorzuleitung zum Drehstrommotor verbunden ist; daß die Spannungsversorgung für die elektromagnetisch betätigte Baugruppe aus dem Schaltgerät über die Gleichrichtervorrichtung mit integrierter Schutzbeschaltung vorgesehen ist und daß die integrierte Schutzbeschaltung für alle internen und externen Bauteile, insbesondere den Schaltkontakt, angeordnet ist.

Das Schaltgerät nach der Erfindung verfügt vorteilhafterweise über eine als Stromwandler ausgebildete Stromerfassung, die eine integrierte Spannungsversorgung zu- oder abschaltet. Die Stromerfassung und die erforderliche Gleichrichtervorrichtung sowie die für ein separat durchgeführtes Beschalten notwendige Schutzbeschaltung sind nunmehr in einem Gehäuse integriert, das vorteilhafterweise direkt an den Klemmkasten des Drehstrommotors angebracht ist.

Weitere Ausgestaltungen der Erfindung sind anhand eines in der Zeichnung dargestellten Ausführungsbeispiels näher erläutert.
Es zeigen:
- Fig. 1: ein Prinzipschaltbild eines an einen Drehstrommotor angeschlossenen erfindungsgemäßen Schaltgerätes mit einer Gleichstrombremse
und
- Fig. 2: ein Prinzipschaltbild eines Ausführungsbeispiels des erfindungsgemäßen Schaltgerätes.

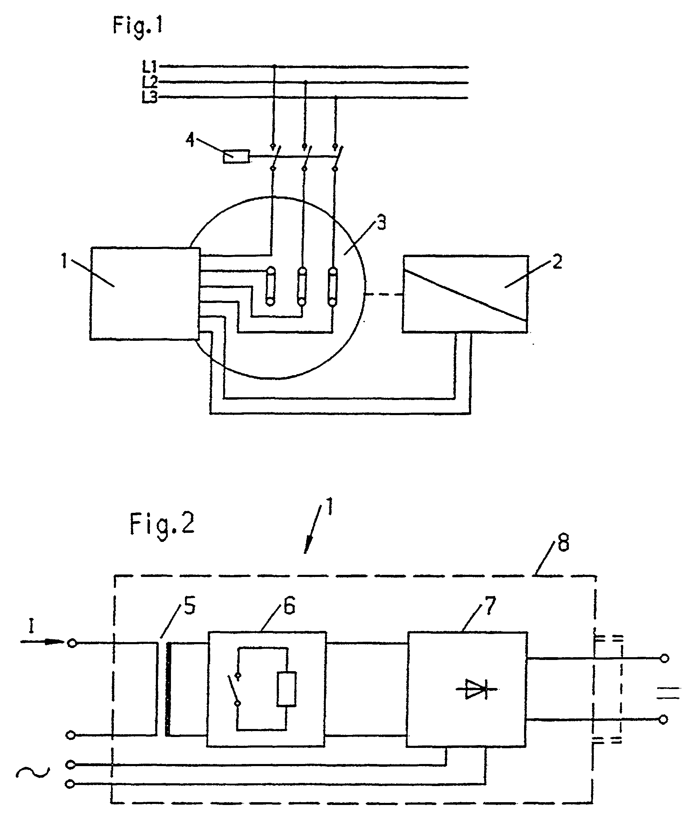

In Fig. 1 sind drei Phasenleiter L1, L2, L3 dargestellt, von denen jeweils Leitungen zu einem Betriebsschütz 4 führen. Zwei Ausgangsklemmen des Betriebsschützes sind jeweils direkt mit zwei Motorklemmen eines Drehstrommotors 3 verbunden. Eine Ausgangsklemme des Betriebsschützes ist über ein Schaltgerät 1 mit der dritten Motorklemme des Drehstrommotors verbunden. Weiterhin ist das Schaltgerät 1 jeweils mit den beiden anderen Klemmen des Drehstrommotors verbunden. Zwei separate Leitungen führen vom schaltgerät 1 zu einer Gleichstrombremse 2 des Drehstrommotors 3.

Das vorteilhafte Schaltgerät 1 nach Fig. 2 weist einen Stromwandler 5 auf, dessen sekundäre Wicklung mit einem Schaltkontakt 6 verbunden ist, während die primäre Wicklung als ein Teil eines Leiters der Zuleitung einer Spannungsversorgung ausgebildet ist. An den Schaltkontakt 6 ist eine Gleichrichtervorrichtung 7 angeschlossen, die mit einer Spannungsquelle verbunden ist, vorzugsweise über die Klemmen des Drehstrommotors 3. In der Gleichrichtervorrichtung 7 ist eine Schutzbeschaltung integriert, die vorzugsweise mittels RC-Glied oder Varistoren arbeitet. Von der Gleichrichtervorrichtung 7 sind zwei Anschlußklemmen für eine Verbindung mit der vorgesehenen Gleichstrombremse für den Drehstrommotor ausgeführt. Das Schaltgerät ist vorteilhafterweise in einem explosionsgeschützten Gehäuse 8 in kompakter Bauweise angeordnet.

Die Spannungsversorgung für das Schaltgerät 1 und die von diesem geschaltete elektromagnetische Baugruppe, vorzugsweise eine Gleichstrombremse 2, erfolgt ausschließlich von der Zuleitung des Drehstrommotors, so daß eine separate Verdrahtung entfällt. Dadurch können Leitungsverluste minimiert werden, weil auf zusätzliche Leitungen verzichtet werden kann.

Die Funktion des Stromwandlers 5 besteht im wesentlichen darin, die Spannungsversorgung für die gesamte nachgeschaltete Elektronik zu übernehmen und damit die Steuerung für die nachgeschalteten elektromagnetischen Baugruppen sicher zu gewährleisten. Wenn der Strom I über die primäre Wicklung des Stromwandlers fließt, wird Spannung in die sekundäre Wicklung des Stromwandlers induziert und damit der Betriebszustand des Motors als "Ein" erfaßt. Durch die in der sekundären Wicklung des Stromwandlers induzierte Spannung wird ein Strom hervorgerufen, der den Schaltkontakt 6 zum Schließen bringt. Dadurch wird die Gleichrichtervorrichtung 7 angesteuert, die die elektromagnetisch betätigte Baugruppe ebenfalls mit Strom versorgt, wodurch beispielsweise die angeschlossene Bremsspule der gleichstrombetriebenen Federkraftbremse erregt wird, so daß die Bremse freigegeben wird.

Wenn der Strom I in der primären Wicklung des Stromwandlers 5 gleich Null ist, dann wird als Betriebszustand des Motors "Aus" erfaßt, so daß im wesentlichen zeitgleich der Schaltkontakt 6 geöffnet und die elektromagnetisch betätigte Baugruppe sofort abgeschaltet wird. Dadurch wird die Bremsspule der Gleichstrombremse entregt, so daß die Druckfedern der Federkraftbremse freigegeben werden und die Bremse eingreift. Dabei sorgt die in der Gleichrichtervorrichtung 7 integrierte Schutzbeschaltung für einen definierten Abbau der induktiven Energie in der Bremsspule der angeschlossenen Gleichstrombremse.

Die Schutzbeschaltung ist dafür vorgesehen, um Schaltspitzen oder Induktionsspannungspitzen, die beim An- und Abschalten von Induktivitäten auftreten, im wesentlichen zu vermeiden, indem geeignete Spannungsbegrenzer, wie beispielsweise Varistoren, Zener-Diodenoderdergleichen, eingebaut werden. Durch die vorteilhafte Kombination einer Sperrdiode und eines Varistors kann die Begrenzungsspannung der Schutzbeschaltung auf einen Wert herabgesetzt werden, der unterhalb der Versorgungsspannung von üblicherweise 400 Volt liegt. Dadurch wird gewährleistet, daß die vorgegebenen Grenzwerte für die elektromagnetische Verträglichtkeit eingehalten werden. Weiterhin wird ein definierter Abbau induktiver Energie sichergestellt, wodurch Totzeiten bei der Entregung von elektromagnetisch betätigten Baugruppen, wie im vorliegenden Fall die Gleichstrombremse, minimiert werden.

Durch die direkte Spannungsversorgung des Schaltgerätes 1 und damit die Steuerung der Gleichrichtervorrichtung 7 über den Stromwandler 5 entfällt eine separate Zuleitung, die für eine deutliche Verlängerung der Entregungszeit verantwortlich ist, weil die in der Motorwicklung vorhandene induktive Energie beispielsweise auch noch die Bremsspule der Gleichstrombremse 2 speist. Bei dem Schaltgerät 1 ist eine Nachspeisung durch die galvanische Trennung des Stromwandlers 5 ausgeschlossen, so daß sich eine sehr hohe Abschaltgeschwindigkeit oder dementsprechend eine sehr kurze Verknüpfungszeit ergibt.

Grundsätzlich können mit dem vorteilhaften Schaltgerät 1 alle elektromagnetisch betätigten Baugruppen, die in Kombination mit Drehstrom- oder Wechselstrommotoren arbeiten, betrieben werden. Darüber hinaus können fallweise Hubmagnete oder alle ähnlichen elektromagnetisch betätigten Geräte oder Baugruppen mit dem Schaltgerät 1 in vorteilhafterweise beschaltet werden.

## Patentansprüche

1. Schaltgerät zur Spannungsversorgung für eine elektromagnetisch betätigte Baugruppe, insbesondere eine elektromagnetisch betätigte Gleichstrombremse eines Drehstrommotors (3), mit einem Schaltkontakt (6) sowie einer Gleichrichtervorrichtung (7) mit integrierter Schutzbeschaltung, die dem Schaltkontakt nachgeschaltet und an der Baugruppe angeschlossen ist, **dadurch gekennzeichnet, daß** ein Stromwandler (5) angeordnet ist, der dem Schaltkontakt (6) vorgeschaltet ist, daß die primäre Wicklung des Stromwandlers (5) als ein Teil eines Leiters der Zuleitung einer Spannungsversorgung ausgebildet ist, daß bei Stromfluß das Schaltgerät eingeschaltet und die Gleichrichtervorrichtung (7) mit Spannung versorgt ist und daß der Stromwandler (5), der Schaltkontakt (6), die Gleichrichtervorrichtung (7) mit angeschlossener Schutzbeschaltung einschließlich aller erforderlichen Anschlüsse in integraler Bauweise in dem Schaltgerät (1) angeordnet sind.

2. Schaltgerät nach Anspruch 1, **dadurch gekennzeichnet, daß** das Schaltgerät (1) für die Spannungsversorgung der Gleichrichtervorrichtung (7) mit zwei Leitern der Zuleitung für den Drehstrommotor (3) verbunden ist.

3. Schaltgerät nach Anspruch 1, **dadurch gekennzeichnet, daß** die Spannungsversorgung für die elektromagnetisch betätigte Baugruppe aus dem Schaltgerät (1) über die Gleichrichtervorrichtung (7) mit integrierter Schutzbeschaltung vorgesehen ist.

4. Schaltgerät nach Anspruch 1, **dadurch gekennzeichnet, daß** die integrierte Schutzbeschaltung für alle internen und externen Bauteile, insbesondere den Schaltkontakt (6), angeordnet ist.

5. Schaltgerät nach Anspruch 1, **dadurch gekennzeichnet, daß** das Schaltgerät (1) in einem Gehäuse (8) angeordnet ist und daß das Gehäuse an gebräuchliche Anschlußkästen, wie Motorklemmkästen, vorzugsweise mittels PG-Gewinde montierbar ist.

## Claims

1. Switching apparatus for voltage supply for an electromagnetically actuated subassembly, particularly an electromagnetically actuated direct current brake of a three-phase motor (3), with a switch contact (6) as well as a rectifier device (7) with integrated protective wiring, which is connected downstream of the switch contact and connected with the subassembly, **characterised in that** a current transformer (5) is arranged, which is connected upstream of the switch contact (6), that the primary winding of the current transformer (5) is formed as part of a conductor of the feed of a voltage supply, that the switching apparatus is switched on in the case of current flow and the rectifier device (7) is supplied with voltage and that the current transformer (5), the switch contact (6), the rectifier device (7) with connected protective wiring and inclusive of all necessary terminals are arranged in integral mode of construction in the switching apparatus (1).

2. Switching apparatus according to claim 1, **characterised in that** the switching apparatus (1) is, for voltage supply of the rectifier device (7), connected with two conductors of the feed for the three-phase motor (3).

3. Switching apparatus according to claim 1, **characterised in that** the voltage supply for the electromagnetically actuated subassembly is provided from the switching apparatus (1) by way of the rectifier device (7) with integrated protective wiring.

4. Switching apparatus according to claim 1, **characterised in that** the integrated protective wiring is arranged for all internal and external components, particularly the switch contact (6).

5. Switching apparatus according to claim 1, **characterised in that** the switching apparatus (1) is arranged in a housing (8) and that the housing can be mounted at customary terminal boxes, such as motor terminal boxes, preferably by means of a PG thread.

## Revendications

1. Appareil de commutation pour l'alimentation en tension pour un module à commande électromagnétique, en particulier un frein à courant continu à commande électromagnétique d'un moteur triphasé (3), comprenant un contact de commutation (6) ainsi qu'un dispositif redresseur (7) avec circuit de protection intégré, qui est monté en aval du contact de commutation et raccordé au module, **caractérisé en ce qu'**est disposé un transformateur de courant (5), monté en amont du contact de commutation (6), que l'enroulement primaire du transformateur de courant (5) est réalisé sous forme d'une partie d'un conducteur d'arrivée d'une alimentation en tension, que lors du passage de courant l'appareil de commutation est mis en circuit et le dispositif redresseur (7) alimenté en tension, et que le transformateur de courant (5), le contact de commutation (6), le dispositif redresseur (7) avec circuit de protection raccordé, y compris toutes les connexions requises, sont disposés en construction intégrale dans l'appareil de commutation (1).

2. Appareil de commutation suivant la revendication 1, **caractérisé en ce que** l'appareil de commutation (1) est relié pour l'alimentation en tension du dispositif redresseur (7) à deux conducteurs de l'arrivée au moteur triphasé (3).

3. Appareil de commutation suivant la revendication 1, **caractérisé en ce que** l'alimentation en tension pour le module à commande électromagnétique à partir de l'appareil de commutation (1) est prévue à travers le dispositif redresseur (7) avec circuit de protection intégré.

4. Appareil de commutation suivant la revendication 1, **caractérisé en ce que** le circuit de protection intégré est agencé pour tous les composants internes et externes, en particulier pour le contact de commutation (6).

5. Appareil de commutation suivant la revendication 1, **caractérisé en ce que** l'appareil de commutation (1) est disposé dans un boîtier (8), et que le boîtier peut être monté sur des boîtes de connexion courantes, telles que des boîtes à bornes de moteurs, de préférence au moyen d'un filetage PG.
